# EUROPÄISCHE PATENTSCHRIFT

(11) **EP 4 008 044 B1**
(45) Veröffentlichungstag und Bekanntmachung des Hinweises auf die Patenterteilung: **02.10.2024**
(21) Anmeldenummer: 19752151.1
(22) Anmeldetag: 02.08.2019
(51) Int. Cl.: H02G 1/12

(54) **VORRICHTUNG ZUR UNTERSTÜTZUNG DER ENTFERNUNG EINER SCHIRMFOLIE EINES ELEKTRISCHEN KABELS**
DEVICE FOR SUPPORTING THE REMOVAL OF A SHIELDING FILM OF AN ELECTRICAL CABLE
DISPOSITIF DESTINÉ À SUPPORTER LE RETRAIT D'UN FILM DE PROTECTION D'UN CÂBLE ÉLECTRIQUE

(43) Veröffentlichungstag der Anmeldung: 08.06.2022
(73) Patentinhaber: Schleuniger AG, 3608 Thun (CH)
(72) Erfinder: BERGER, Patrick, 3612 Steffisburg (CH); BLICKENSTORFER, Willi, 8143 Stallikon (CH); DESCHLER, Raphael, 3653 Oberhofen (CH); HOFER, Reto, 3705 Faulensee (CH); JOST, Michael, 3600 Thun (CH)
(74) Vertreter: BOVARD AG
(86) Internationale Anmeldenummer: PCT/EP2019/070927
(87) Internationale Veröffentlichungsnummer: WO 2021/023362

(56) Entgegenhaltungen:
- DE-B3- 102017 221 115
- US-A- 1 784 298
- US-A- 5 142 121
- ANONYMOUS: "Fluorinated ethylene propylene - Wikipedia", WIKIPEDIA.ORG, 10 December 2011 (2011-12-10), XP055672642, Retrieved from the Internet <URL:https://en.wikipedia.org/w/index.php?title=Fluorinated_ethylene_propylene&oldid=465176302> [retrieved on 20200302]

## Beschreibung

### Technisches Gebiet der Erfindung

Die vorliegende Erfindung bezieht sich auf eine Vorrichtung zur Unterstützung der Entfernung einer Schirmfolie von einem zu bearbeitenden Abschnitt eines elektrischen Kabels. Insbesondere betrifft die vorliegende Erfindung eine Vorrichtung mittels welcher eine Sollbruchstelle in der Schirmfolie erzeugbar ist. Speziell bezieht sich die vorliegende Erfindung auf eine Vorrichtung zur Unterstützung der Entfernung einer Schirmfolie, umfassend Werkzeuge zur Erzeugung einer Sollbruchstelle, die, vorzugsweise über die Schmelztemperatur der Schirmfolie, heizbar sind.

### Stand der Technik

Die Verarbeitung der Kabelenden von Koaxialkabeln mit einer Schirmfolie ist ein mehrschrittiger Prozess, ausgehend vom Ablängen der Kabel bis zum Crimpen eines Steckers auf den Innenleiter. Ein Teilschritt dieses Prozesses ist das Entfernen der Schirmfolie. Die Folie ist meist spiralförmig um das metallische Abschirmgeflecht aufgewickelt und somit, durch ihre Überlappung, zum Teil doppelschichtig. Eine solche Schirmfolie besteht meist aus einer mit PET überzogenen Alufolie.

Im oben erwähnten Kabelend-Verarbeitungsprozess wird bis heute meistens die Isolation bis auf die Abschirmfolie eingeschnitten und abgezogen. Danach wird die Schirmfolie manuell bis zur gewünschten Stelle abgewickelt und abgeschnitten. Die Entfernung der Schirmfolie stellt eine besondere Herausforderung dar, da sie nicht wie die Isolation rotativ eingeschnitten werden kann, da die Schirmfolien dafür zu dünn sind, sodass durch die Unrundheit des Kabels das rotative Schneiden der Schirmfolie meist zu einer Verletzung des darunterliegenden Schirmgeflechts führen würde. Eine rotative Abisoliermaschine zum Entfernen der Isolation eines Kabels, nicht aber einer Schirmfolie, ist zum Beispiel aus US1784298A bekannt.

Eine manuelle Entfernung der Schirmfolie ist mit Unsicherheiten behaftet und kann keine konstante Bearbeitungsqualität garantieren. Zudem dauert dieser Bearbeitungsschritt von Hand deutlich länger, als wenn er Teil eines automatischen Ablaufes wäre, und ist darum mit höheren Langzeitkosten verknüpft.

Bekannt sind Verfahren und Vorrichtungen, die die Entfernung der metallischen Abschirmung oder der Schirmfolie eines koaxialen Kabels durch eine thermische Behandlung der zu entfernenden Abschirmung oder Folie unterstützen. Die bekannten Vorrichtungen, die eine thermische unterstützende Behandlung der Schirmfolie benutzen, sind aber impraktikabel und führen nicht zu befriedigenden und vor allem wiederholbaren Resultaten.

Bekannt ist aus US 5 142 121 auch ein Verfahren zur Verarbeitung der Kabelenden eines Kabels und der dafür verwendeten Vorrichtung bei welchem, zunächst die wärmehärtende Harzschicht des Kabels wärmegehärtet wird, zum Beispiel durch einen Laserstrahl. Anschliessend wird die wärmehärtende Harzschicht geschnitten und abgezogen.

Ausgehend vom Stand der Technik liegt der vorliegenden Erfindung daher die Aufgabe zugrunde, vorbesagte Nachteile zu überwinden und eine Vorrichtung zur Unterstützung der Entfernung einer Schirmfolie vorzuschlagen, welche Vorrichtung es ermöglicht, eine Sollbruchstelle in der Schirmfolie zufriedenstellend und reproduzierbar mit einem automatisierten Ablauf zu erzeugen, ohne dabei die darunterliegenden Kabelteile, insbesondere das metallische Schirmgeflecht, zu verletzen.

### Zusammenfassung der Erfindung

Gemäss der vorliegenden Erfindung werden diese Ziele vor allem durch die Elemente des unabhängigen Anspruchs erreicht. Weitere vorteilhafte Ausführungsformen gehen ausserdem aus den abhängigen Ansprüchen und der Beschreibung hervor.

Insbesondere werden die Ziele der vorliegenden Erfindung erreicht durch eine Vorrichtung zur Unterstützung der Entfernung einer zumindest teilweise freigelegten Schirmfolie eines elektrischen Kabels, umfassend mindestens ein Werkzeug, das zumindest teilweise entlang eines Umfangs der Schirmfolie mit dem Kabel in Kontakt bringbar ist, wobei mittels des Werkzeugs eine Sollbruchstelle in die Schirmfolie erzeugbar ist, wobei das Werkzeug scheibenförmig und um eine Werkzeugdrehachse drehbar montiert ist, wobei das Werkzeug mittels eines Motors der Vorrichtung in eine Kreisbewegung bringbar ist, um eine Vorrichtungsdrehachse, die der Längsachse des elektrischen Kabels entspricht, dessen Schirmfolie zu entfernen ist, und wobei die Vorrichtung Heizmittel umfasst, mittels welcher das Werkzeug heizbar ist, wobei das Werkzeug mittels eines induktiven Heizsystems heizbar ist, wobei das induktive Heizsystem mindestens eine Induktionsspule, vorzugsweise eine Planarspule, umfasst, die im Wesentlichen planparallel zum Werkzeug orientiert und wobei die Induktionsspule koaxial um die Vorrichtungsdrehachse positioniert ist.

Dank einer erfindungsgemässen Vorrichtung kann mit geheiztem und um das Kabel zum mindestens teilweise kreisendem Werkzeug eine Sollbruchstelle in der Schirmfolie wirksam erzeugt werden. Darüber hinaus, da das Werkzeug um eine Werkzeugdrehachse drehbar montier ist, kann der in Kontakt mit der Schirmfolie kommende Teil des Werkzeugs immer die gewünschte Temperatur aufweisen. Dank der Rotation des Werkezugs kann ferner gewährleistet werden, dass allfällige Rückstände der Schirmfolie, die an dem Werkzeug haften würden, abtransportiert und vom Werkzeug getrennt werden können. Dadurch kann gewährleistet werden, dass eine stetige und homogene Sollbruchstelle entlang des ganzen Umfangs des Kabels erzeugt wird. Mit einer derart erzeugten Sollbruchstelle ist es in einem weiteren Bearbeitungsschritt dann einfach die Schirmfolie an der Sollbruchstelle durchreissen zu lassen und vom Kabel zu entfernen.

Dank einem induktiven Heizsystem kann das Werkzeug ohne direkte Kabelverbindung mit einer Stromquelle geheizt werden. Das hat den Vorteil, dass das Werkzeug eine oder mehrere komplette Rotationen um das Kabel machen kann, was zu einer Erhöhung der Qualität der Sollbruchstelle in der Schirmfolie führt. Mit der Planarspule kann das Werkzeug in jeder Position um das Kabel geheizt werden. Wenn die Planarspule so konfiguriert ist, dass das dadurch erzeugte Magnetfeld, immer das gesamte Werkzeug erfasst, kann das Werkzeug in jeder Position um das Kabel homogen geheizt werden. Dank der Planarspule ist es auch möglich, schnell und einfach die Intensität des magnetischen Feldes und demzufolge die Temperatur des Werkzeuges einzustellen. Vorzugsweise umfasst die Spule 1 bis 40 Windungen, vorteilhafterweise 3 bis 15 Windungen, vorzugsweise mindestens 5 bis 10 Windungen. Mit einer geeigneten Anzahl von Windungen kann der für das Erzeugen des magnetischen Feldes benötigte elektrische Strom in einem für die elektrischen Bauteile erträglichen Bereich gehalten werden. Mit einem geeigneten Verhältnis zwischen Querschnitt des Kabels der Spule und elektrischem Strom kann verhindert werden, dass die Spule sich übermässig erhitzt. Mit einer koaxialen Anordnung der Spule wird das Werkzeug in jeder Position um das Kabel mit einem magnetischen Fluss der gleichen Intensität erfasst. Damit wird das Werkzeug in jeder Position gleich geheizt. Dies führt schlussendlich zu einer homogenen und stetigen Sollbruchstelle in der Schirmfolie, da das Werkzeug unabhängig von dessen Position um das Kabel die gleiche Temperatur aufweist.

In einer ersten bevorzugten Ausführungsform der vorliegenden Erfindung ist das Werkzeug mit einer abrollenden Bewegung um die Schirmfolie in eine Kreisbewegung bringbar. Es ist besonders vorteilhaft, wenn das Werkzeug nur eine abrollende Bewegung aufweist und gegenüber der Schirmfolie nicht rutscht. Dadurch kann sichergestellt werden, dass eine stetige und homogene Sollbruchstelle erzeugt wird und die darunterliegende Schicht, meist ein Schirmgeflecht, nicht beschädigt wird.

In einer anderen bevorzugten Ausführungsform der vorliegenden Erfindung ist das Werkzeug mittels eines Zustellmechanismus radial zur Vorrichtungsdrehachse von einer offenen Stellung, in welcher das Werkzeug mit der Schirmfolie des Kabels nicht in Kontakt ist, in eine zugestellte Stellung, in welcher das Werkzeug in Kontakt mit der Schirmfolie des Kabels ist, zustellbar. Dadurch kann die Position des Werkzeugs gegenüber der Schirmfolie optimal eingestellt werden. Es können somit Kabel verschiedener Durchmesser mit einer erfindungsgemässen Vorrichtung bearbeitet werden. Ein präziser Zustellmechanismus ist insbesondere wichtig, um sicherzustellen, dass eine Sollbruchstelle erzeugt wird, ohne dass das unter der Schirmfolie liegende Material des Kabels beschädigt wird. Das ist besonders vorteilhaft bei der Bearbeitung von hochpräzisen elektrischen Kabeln umfassend unter der Schirmfolie ein Schirmgeflecht, das nicht beschädigt werden soll.

In einer anderen bevorzugten Ausführungsform der vorliegenden Erfindung ist der Zustellmechanismus pneumatisch, hydraulisch oder elektromotorisch antreibbar. Ein pneumatischer Antrieb ermöglicht eine sehr schnelle Zustellung des Werkzeugs und kann kostengünstig implementiert werden.

In einer weiteren bevorzugten Ausführungsform der vorliegenden Erfindung ist das Werkzeug mit einer einstellbaren Anpresskraft radial zur Vorrichtungsdrehachse an die Folie drückbar. Dadurch kann sichergestellt werden, dass das Werkzeug mit der Schirmfolie immer in Kontakt bleibt, auch bei hoher Kreisgeschwindigkeit des Werkzeugs um das Kabel.

In einer weiteren bevorzugten Ausführungsform der vorliegenden Erfindung wird der Betrag der Anpresskraft mit der Vorspannung einer Feder eingestellt. Dadurch ist die Anpresskraft nicht von der Reibung in einem pneumatischen oder hydraulischen Antrieb abhängig.

In einer noch weiteren bevorzugten Ausführungsform der vorliegenden Erfindung ist der Betrag der Anpresskraft mit dem pneumatischen oder hydraulischen Druck des Zustellmechanismus einstellbar. Dadurch kann eine stetige Sollbruchstelle in der Schirmfolie erzeugt werden, während es gewährleistet wird, dass das unter der Schirmfolie liegende Material nicht beschädigt wird. Die Möglichkeit die Anpresskraft des Werkzeugs auf die Schirmfolie einstellen zu können, ist darüber hinaus wichtig, um sicherzustellen, dass die Werkzeuge immer die gleiche Kraft auf die Schirmfolie ausüben, was zu einer hohen Kontinuität der erzeugten Sollbruchstellen führt. Dadurch kann die Qualität der bearbeiteten Kabel erhöht werden.

In einer anderen Ausführungsform, nicht wie in der beanspruchten Erfindung, ist das Werkzeug mittels eines Heizwiderstands heizbar. Dadurch kann das Werkzeug schnell und mit einfachen Mitteln geheizt werden. Darüber hinaus sind Heizwiderstände heutzutage billig und können bei Bedarf ersetzt werden

In einer anderen bevorzugten Ausführungsform der vorliegenden Erfindung umfasst die Vorrichtung einen zumindest teilweise um die Induktionsspule platzierten magnetisch leitfähigen Spulenkörper, vorzugsweise mit einer magnetischen Permeabilität grösser als 2, mittels welchem die Induktivität der Induktionsspule erhöht und das magnetische Feld der Spule in Richtung des Werkzeuges lenkbar ist. Durch die erhöhte Induktivität und das Ablenken des magnetischen Feldes der Spule in Richtung des Werkzeuges, kann mit einem geringeren elektrischen Strom in der Spule die gleiche Werkzeugtemperatur erreicht werden. Darüber hinaus hat das Ablenken des magnetischen Feldes und die Konzentration des magnetischen Feldes im Spulenkörper den weiteren Vorteil, dass das magnetische Streufeld um die Spule geringer ist und dadurch magnetisch empfindliche Gegenstände oder Vorrichtungen in der Nähe der erfindungsgemässen Vorrichtung positioniert werden können, ohne die Gefahr einer unzulässig grossen magnetischen Kopplung zwischen dem induktiven Heizsystem und einem solchen magnetisch empfindlichen Objekt zu bewirken.

In einer weiteren bevorzugten Ausführungsform der vorliegenden Erfindung besteht der Spulenkörper zumindest teilweise aus einem weichmagnetischen Material, vorzugsweise aus einem ferromagnetischen oder ferritischen Material. Dadurch kann das magnetische Feld besonders effektiv im Spulenkörper konzentriert und in Richtung des Werkzeugs abgelenkt werden.

In einer anderen bevorzugten Ausführungsform der vorliegenden Erfindung besteht der Spulenkörper zumindest teilweise aus einem isolierten Eisenpulver mit Bindemittel. Dadurch kann mit einem mechanisch bearbeitbaren Material eine hohe magnetische Permeabilität des Spulenkörpers und ein sehr effektives Ablenken des magnetischen Feldes der Spule in Richtung des Werkzeugs erreicht werden. Darüber hinaus sind Materialien bestehend zumindest teilweise aus untereinander isolierenden Eisenpulverkörnern mit Bindemittel, vorzugsweise mit hochtemperaturbeständigem organischen Bindemittel, weichmagnetisch und unterbinden Wirbelströme, weshalb sie, wie auch Ferrite, bis weit über 100 kHz einsetzbar sind. Gegenüber den mechanisch harten und spröden Ferriten haben Materialien bestehend zumindest teilweise aus untereinander isolierenden Eisenpulverkörnern mit Bindemittel jedoch den Vorteil, dass sie mechanisch gut bearbeitbar sind.

In einer anderen bevorzugten Ausführungsform der vorliegenden Erfindung besteht das Werkzeug zumindest teilweise aus einem ferromagnetischen Material. Dadurch ist die Heizwirkung im Werkzeug durch das induktive Heizsystem besonders hoch.

In einer anderen bevorzugten Ausführungsform der vorliegenden Erfindung umfasst die Vorrichtung ein Kühlungssystem zur Kühlung des induktiven Heizsystems. Damit wird gewährleistet, dass die Temperatur der Induktionsspule, des Spulenkörpers und der Elektronik limitiert werden kann. Das ist besonders vorteilhaft, da die Temperaturen der Spule und des Spulenkörpers die Intensität des erzeugten magnetischen Feldes und demzufolge die Temperatur des Werkzeugs beeinflussen. Um sicherzustellen, dass die Sollbruchstellen die gleiche Qualität aufweisen, ist es daher vorteilhaft ein Kühlungssystem vorzusehen.

In einer anderen bevorzugten Ausführungsform der vorliegenden Erfindung ist das Kühlungssystem ein Luftkühlungssystem oder ein Wasserkühlungssystem. Dadurch kann die Temperatur des induktiven Heizsystems besonders wirksam und einfach reguliert werden.

In einer anderen bevorzugten Ausführungsform der vorliegenden Erfindung umfasst die Vorrichtung eine Abrollplatte, mittels welcher das Werkzeug auch in offener Stellung um die Werkzeugdrehachse gedreht wird. Dadurch kann gewährleistet werden, dass sich das Werkzeug auch in seiner offenen Stellung um die Werkzeugdrehachse dreht. Das ist besonders vorteilhaft im Fall einer induktiven Heizung des Werkzeugs. Das drehende Werkzeug kann dadurch auch in offener Stellung in einem inhomogenen magnetischen Feld einer Induktionsspule drehen und dadurch trotzdem homogen geheizt werden. Da die Temperatur der Werkzeugschneide um ihren ganzen Umfang dadurch gleich gross ist, kann somit eine hochwertige Sollbruchstelle in der Schirmfolie erzeugt werden.

In einer anderen bevorzugten Ausführungsform der vorliegenden Erfindung ist das Werkzeug ein Messer, welches eine runde Schneidkante aufweist. Damit kann eine Sollbruchstelle nicht nur aufgrund der Temperatur des Werkzeugs sondern auch mechanisch erzeugt werden.

In einer anderen bevorzugten Ausführungsform der vorliegenden Erfindung umfasst die Vorrichtung mehrere, vorzugsweise drei, Werkzeuge, die koplanar in einer senkrecht zur Vorrichtungsachse orientierten Ebene angeordnet sind. Dadurch müssen die Werkzeuge keine komplette Rotation um das Kabel machen, um eine Sollbruchstelle entlang des ganzen Umfangs des Kabels erzeugen zu können. Mit drei Werkzeugen ist es zum Beispiel genügend, wenn die Werkzeuge eine Schwenkbewegung von mindestens ±60° ausführen.

In einer weiteren bevorzugten Ausführungsform der vorliegenden Erfindung sind alle ausser eines der Werkzeuge Zentrierwerkzeuge. Diese sind aus einem elektrisch und/oder einem magnetisch schlecht leitenden Material und werden deshalb durch die induktive Heizung wenig oder nicht erhitzt. Damit kann gewährleistet werden, dass auch ein exzentrisch platziertes Kabel keinen Doppelschnitt erhält, was die Qualität und Homogenität der erzeugten Sollbruchstellen erhöht.

In einer weiteren bevorzugten Ausführungsform der vorliegenden Erfindung ist das Werkzeug auf mindestens 250°C, vorteilhafterweise auf mindestens 400°C, vorzugsweise auf mindestens 550°C, heizbar. Dadurch können auch Sollbruchstellen in Schirmfolie, die eine hohe Schmelztemperatur aufweisen, erzeugt werden.

In einer anderen bevorzugten Ausführungsform der vorliegenden Erfindung umfasst die Vorrichtung einen Öffnungsanschlag, mittels welchem der Abstand zwischen dem Werkzeug in offener Stellung und der Vorrichtungsdrehachse einstellbar ist. Damit kann sichergestellt werden, dass das Werkzeug in offener Stellung immer den gleichen Abstand zur Drehachse der Vorrichtung annimmt.

In einer weiteren bevorzugten Ausführungsform der vorliegenden Erfindung ist der Öffnungsanschlag gefedert. Dadurch kann das Werkzeug in die offene Stellung gebracht werden, ohne die Gefahr eine Beschädigung des Zustellmechanismus oder des Werkzeugs.

Weitere Einzelheiten der Erfindung gehen aus der nun folgenden Beschreibung der bevorzugten Ausführungsformen der Erfindung hervor, welche in den beigelegten Zeichnungen dargestellt sind. Aus der Beschreibung lassen sich auch die weiteren Vorteile der vorliegenden Erfindung entnehmen sowie Anregungen und Vorschläge, wie die Erfindungsgegenstände im Rahmen des Beanspruchten abgeändert oder auch weiterentwickelt werden könnte.

### Kurzbeschreibung der Zeichnungen

Das Ausführungsbeispiel einer Vorrichtung (100) zur Unterstützung der Entfernung einer Schirmfolie gemäß den Figuren 1 bis 7 fällt nicht unter den Wortlaut der Ansprüche, wird aber als das Verständnis der Erfindung erleichternd angesehen.
Figur 1 zeigt eine perspektivische Ansicht eines ersten Beispiels einer Vorrichtung zur Unterstützung der Entfernung einer Schirmfolie eines elektrischen Kabels;
Figur 2 zeigt eine Detailansicht des Zustellmechanismus des ersten Beispiels gemäss Figur 1 ;
Figur 3 zeigt eine Seitenansicht des Werkzeugs und des Heizsystems des ersten Beispiels gemäss Figur 1 ;
Figur 4 zeigt eine Seitenschnittansicht des Werkzeugs und des Heizsystems des ersten Beispiels gemäss Figur 1 ;
Figur 5 zeigt eine perspektivische Ansicht des Werkzeugs und des Heizsystems des ersten Beispiels gemäss Figur 1 ;
Figur 6 zeigt eine perspektivische Explosionsansicht des Werkzeugs und des Heizsystems des ersten Beispiels gemäss Figur 1 ;
Figur 7 zeigt eine perspektivische Ansicht der Drehwinkelbegrenzung des ersten Beispiels gemäss Figur 1 ;
Figur 8 zeigt eine perspektivische Ansicht einer ersten Ausführungsform einer erfindungsgemässen Vorrichtung, in welcher sich die Werkzeuge in offener Stellung befinden;
Figur 9 zeigt eine perspektivische Ansicht der ersten Ausführungsform einer erfindungsgemässen Vorrichtung, in welcher sich die Werkzeuge in zugestellter Stellung befinden;
Figur 10 zeigt eine Seitenschnittansicht des Heizsystems der ersten Ausführungsform einer erfindungsgemässen Vorrichtung;
Figur 11 zeigt eine erste perspektivische Schnittansicht des Heizsystems der ersten Ausführungsform einer erfindungsgemässen Vorrichtung;
Figur 12 zeigt eine zweite perspektivische Schnittansicht des Heizsystems der ersten Ausführungsform einer erfindungsgemässen Vorrichtung;
Figur 13a zeigt eine Seitenschnittansicht des Öffnungsanschlags der ersten Ausführungsform einer erfindungsgemässen Vorrichtung, in welcher sich die Werkzeuge in zugestellter Stellung befinden;
Figur 13b zeigt eine Seitenschnittansicht des Öffnungsanschlags der ersten Ausführungsform einer erfindungsgemässen Vorrichtung, in welcher sich die Werkzeuge in offener Stellung befinden;
Figur 14 zeigt eine perspektivische Ansicht einer zweiten Ausführungsform einer erfindungsgemässen Vorrichtung; und
Figur 15 zeigt eine perspektivische Schnittansicht der zweiten Ausführungsform einer erfindungsgemässen Vorrichtung.

### Bevorzugte Ausführungsformen der Erfindung

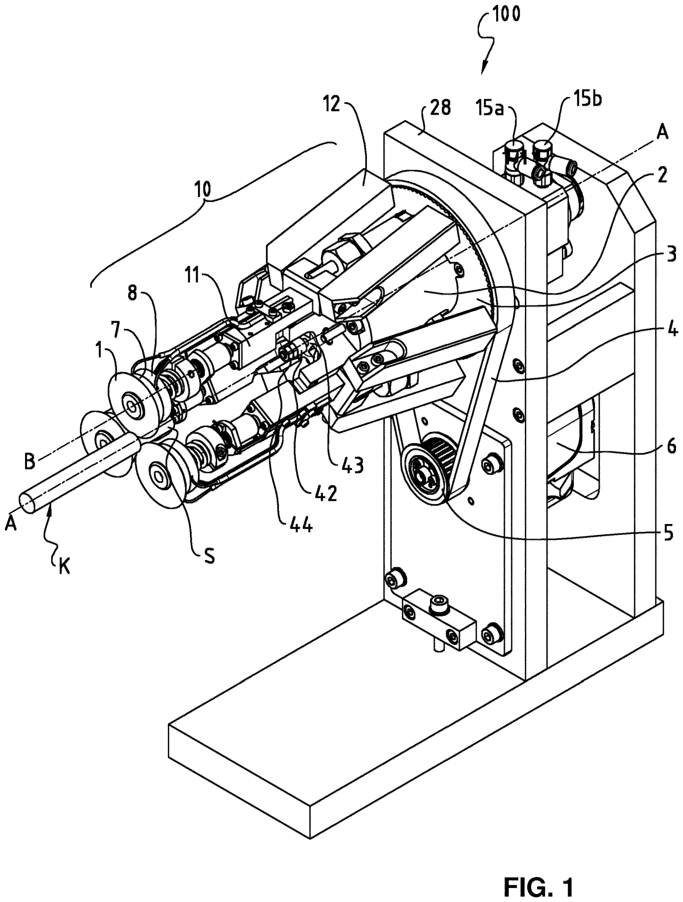

Figur 1 zeigt ein erstes Beispiel einer Vorrichtung 100 zur Unterstützung der Entfernung der Schirmfolie eines elektrischen Kabels K, welche außerhalb des Schutzumfangs des Anspruchs fällt. Die Vorrichtung 100 umfasst drei scheibenförmige Werkzeuge 1, die in einer zur Vorrichtungsdrehachse A der Vorrichtung senkrechten Ebene angeordnet sind. Die Längsachse des zu bearbeitenden Kabels K entspricht idealerweise der Vorrichtungsdrehachse A. Die Werkzeuge 1 sind gegenüber der Vorrichtungsdrehachse A radial zustellbar und können mit dem Kabel K, insbesondere mit der Schirmfolie des Kabels K, in Kontakt gebracht werden. Der für die Zustellung der Werkzeuge vorgesehene Zustellmechanismus 10 ist nachfolgend in Details beschrieben. Die Werkzeuge 1 sind darüber hinaus um die Werkzeugdrehachse B drehbar montiert. Die Werkzeuge 1 sind jeweils an einer Vorrichtungswelle 2 angebracht, welche mittels eines ersten Zahnriemenrads 3, eines Zahnriemens 4, eines zweiten Zahnriemenrads 5 und eines Motors 6 um die Vorrichtungsdrehachse A gedreht werden kann. Somit können die Werkzeuge 1 rotativ um die Vorrichtungsdrehachse A mittels des Motors 6 angetrieben werden und kreisen dabei um das Kabel K. Wenn die Werkzeuge 1 radial so zugestellt worden sind, dass sie während dem Kreisen um die Vorrichtungsdrehachse A in Kontakt mit dem Kabel sind, drehen die Werkzeuge 1 um ihre eigene Werkzeugdrehachse B und kreisen somit mit einer abrollenden Bewegung um das Kabel K.

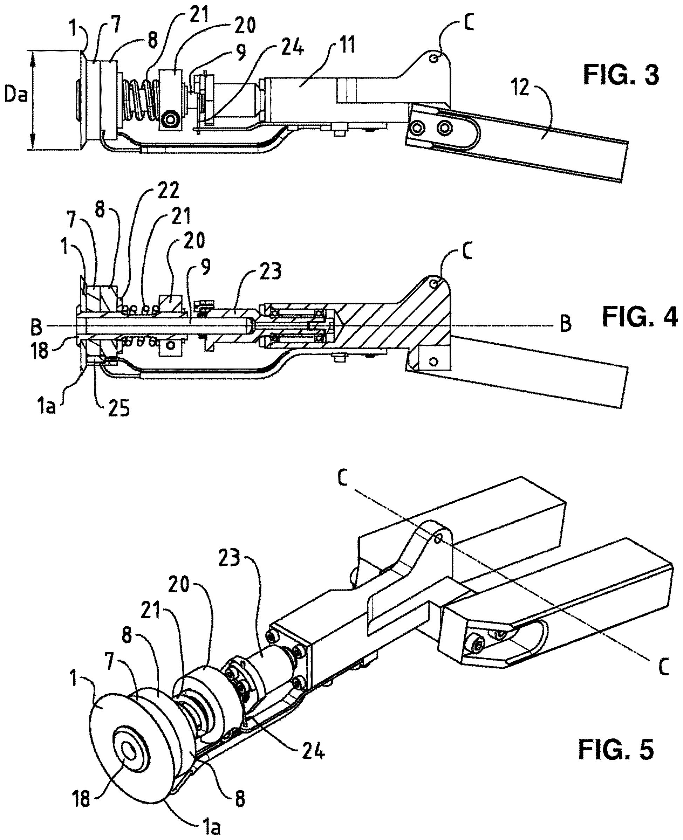

Um eine Sollbruchstelle in der Schirmfolie des Kabels K effizient zu erzeugen, verfügen die Werkzeuge 1 vorteilhafterweise über eine Schneidkante 1a und sind bis auf eine Temperatur von mindestens 250°C, vorteilhafterweise mindestens 400°C, vorzugsweise mindestens 550°C, heizbar. Im Beispiel gemäss Figur 1 werden die Werkzeuge 1 mittels Heizwiderstände 7, hier in Form von Heizringen, erhitzt. Die Heizwiderstände 7 sind vorzugsweise mit den Werkzeugen 1 direkt in Kontakt oder durch ein gut wärmleitendes Material mit den Werkzeugen 1 verbunden. Vorteilhafterweise sind die Werkzeuge 1 und die Heizwiderstände 7 über eine schlecht wärmleitende Isolationsscheibe 8 und eine Werkzeugwelle 9 (siehe Figuren 4 bis 6) mit dem Zustellmechanismus 10 verbunden.

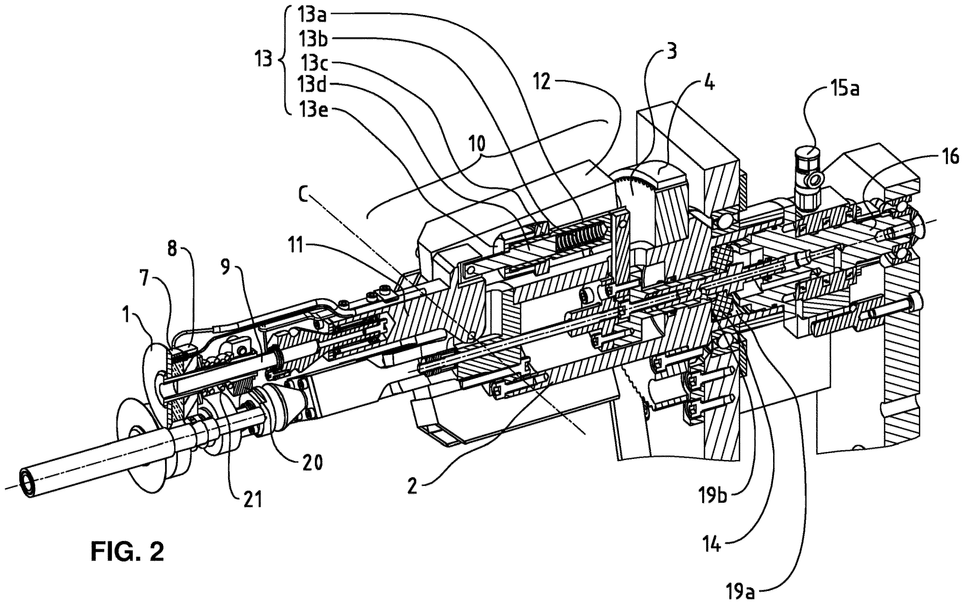

Figur 2 zeigt detailliert die Funktionsweise des Zustellmechanismus 10. Die Werkzeuge 1 sind mittels einer Werkzeugwelle 9, vorzugsweise aus Keramik, an die Kipparme 11, welche um die Kipparmdrehachse C drehbar gelagert sind, an der Vorrichtungswelle 2 angebracht. Durch Schwenken der Kipparme 11 um die Kipparmdrehachsen C können die Werkzeuge 1 radial von einer offenen Stellung, in welcher die Werkzeuge 1 die Schirmfolie des Kabels nicht berühren, in eine zugestellte Stellung, in welcher die Werkzeuge in Kontakt mit der Schirmfolie sind, zugestellt werden.

Gegengewichte 12 sind vorteilhafterweise vorgesehen, um das Gewicht der Kipparme 11, der Werkzeugwelle 9, der Werkzeuge 1, der Heizringe 7 und der Isolationsscheiben 8 zu kompensieren. Die Gegengewichte 12 haben ein Gewicht und sind derart angeordnet, um dem Eigengewicht und der Fliehkraft der Werkzeuge entgegenzuwirken, sodass die Werkzeuge 1 während sie die Längsachse des Kabels K umkreisen stets mit konstanter Anpresskraft in Kontakt mit der Schirmfolie gehalten werden können. Dies ist insbesondere bei sehr hohen Kreisgeschwindigkeiten vorteilhaft, da sich sonst die Werkzeuge 1 durch die Fliehkraft von der Schirmfolie entfernen würden.

Für die Zustellung der Werkzeuge 1 sind die Verbindungszylinder 13 vorgesehen. Durch eine translatorische Bewegung des Verbindungszylinders 13 entlang einer Richtung parallel zur Vorrichtungsdrehachse A kann eine Kippbewegung der Kipparme 11 bewirkt und die Werkzeuge 1 radial zugestellt werden. Die Verbindungszylinder 13 mit Federzylinder 13a, Zylinderfeder 13b, Überwurfkontermutter 13c, Zylinderstange 13d und Überwurfmutter 13e sind mit dem Druckkolben 14 verbunden, welcher koaxial in der Vorrichtungswelle 2 angeordnet ist und diese in eine Schliessdruckkammer 19a und eine Öffnungsdruckkammer 19b unterteilt. Die Schliessdruckkammer 19a ist mit dem Schliessdruckanschluss 15a und die Öffnungsdruckkammer 19b mit dem Öffnungsdruckanschluss 15b (siehe Figur 1) verbunden. Somit kann pneumatisch oder hydraulisch vorzugsweise mittels Druckluft und dank einem Rotationsverteiler 16 die Position des Druckkolbens 14 innerhalb der Vorrichtungswelle 2 auch dann eingestellt werden, wenn die Vorrichtungswelle 2 vom Motor 6 angetrieben wird. Durch die Einstellung der Position des Druckkolbens 14 innerhalb der Vorrichtungswelle 2 können die Werkzeuge 1 radial zugestellt und geöffnet werden. Mit der Zylinderfeder 13b, deren Vorspannkraft und Federkonstante kann somit die Anpresskraft der Werkzeuge 1 auf die Schirmfolie eingestellt werden.

Alternativ kann auch mit dem Differenzdruck PD zwischen Schliessdruckkammer 19a und Öffnungsdruckkammer 19b die Anpresskraft der Werkzeuge 1 auf die Schirmfolie eingestellt werden. Bei dieser Alternative ist es zweckmässig, wenn die Verbindungszylinder 13 durch ungefederte Verbindungsstäbe ersetzt werden, wodurch der Werkzeugöffnungsdurchmesser immer koaxial zur Vorrichtungsdrehachse A ist Es sind auch Mischformen der Einstellung der Werkzeuganpresskraft möglich: Über die Zylinderfeder 13b und den Differenzdruck *PD.*

Durch die federnde Messerzustellung über die Verbindungszylinder 13 kann der Elliptizität des Kabels Rechnung getragen werden, sodass die Anpresskraft der Werkzeuge 1 auf die Schirmfolie während dem Kreisen um das Kabel konstant bleibt.

Wie in der Figur 1 gezeigt, verfügt die Vorrichtung 100 über einen Öffnungsanschlag 42 um den Schwenkwinkel der Werkzeuge 1 in offener Stellung zu limitieren. Der Öffnungsanschlag 42 umfasst eine Anschlagstange 43, die mit dem Druckkolben 14 verbunden ist, einen Anschlagring 46 und zwei Kontermuttern 44, die auf die Anschlagstange 43 geschraubt werden können. Mit der Position der Kontermuttern 44 auf der Anschlagstange 43 kann der Öffnungsdurchmesser der Werkzeuge 1 eigestellt werden.

Figuren 3 bis 6 zeigen detaillierte Ansichten der Werkzeuge 1 und der Kipparme 11 gemäss dem ersten Beispiel. Wie schon erläutert, können die Werkzeuge 1 mittels Heizwiderstände 7 in Form von Heizplatten, Heizscheiben oder Heizringen, vorzugsweise in Form von Keramikheizringen, direkt geheizt werden. Der nötige elektrische Strom für die Heizwiederstände 7 wird über die elektrischen Drähte 17 geliefert. Wie zum Beispiel in Figur 3 zu sehen ist, sind die Drähte 17 an einem Ende an die Kipparme 11 angebracht. Da die Werkzeuge 1, um eine Sollbruchstelle in der Schirmfolie effizient erzeugen zu können, auf mehrere hundert Grad Celsius geheizt werden sollen, ist es vorteilhaft, wie vorgängig schon erläutert, wenn die Werkzeuge 1 vom Zustellmechanismus 10 thermisch isoliert sind.

Wie am besten aus der Figur 4 zu entnehmen ist, sind die Werkzeuge 1, die Heizwiederstände 7 und die Isolierscheiben 8 auf geschlitzten Werkzeughülsen 18 gegen deren Schulter gestapelt und mit Verspannfedern 21 gegeneinander verspannt. Mit dem Klemmring 20 kann die Position der auf der Werkzeugwelle 9 verschiebbaren Werkzeughülse 18 fixiert werden. Damit kann die Position der Werkzeuge 1 präzis eingestellt werden, sodass alle drei tangierenden Berührungs-Punkte der Werkzeuge 1 mit der Schirmfolie des Kabels in derselben Querschnittsebene des Kabels K liegen, sofern das Kabel Koaxial zur Werkzeugachse positioniert ist. Das ist vorteilhaft, um einen Mehrfachschnitt der Schirmfolie zu vermeiden.

Darüber hinaus ist eine Verspannfeder 21 zwischen Klemmring 20 und Isolationsscheibe 8 vorgesehen. Um die Isolationsscheibe 8 zu schonen, ist vorteilhafterweise noch ein aus Metall bestehender Pressring 22 zwischen Isolationsscheibe 8 und Verspannfeder 21 vorgesehen. Mittels Verspannfeder 21 wird der Heizring 7 gegen das Werkzeug 1 gedrückt, um stets einen guten thermischen Kontakt zwischen diesen Elementen zu gewährleisten. Darüber hinaus kann mit der Verspannfeder 21 die sich gesamthaft ergebende Ausdehnung durch unterschiedliche thermische Ausdehnungen des Werkzeugs 1, des Heizringes 7, der Isolationsscheibe 8 und der Werkzeughülse 18 kompensiert werden.

Auf der Seite der Kipparme 11, sind die Werkzeugwellen 9 mittels vorzugsweise aus Metall bestehenden Lagerhalterungen 23 drehbar in den Kipparmen angebracht. Damit könnten die Werkzeuge 1 grundsätzlich frei um die Werkzeugdrehachse B drehen. Wie in den Figuren 3 und 5 zu sehen ist, wird eine freie Drehung der Werkzeuge 1 um die Werkzeugdrehachse B durch die Schenkelfedern 24 begrenzt. Die Schenkelfedern 24 ermöglichen eine federnde Rückstellung der Werkzeuge 1 nach einer Schwenkung der Werkzeuge 1 um die Achse B.

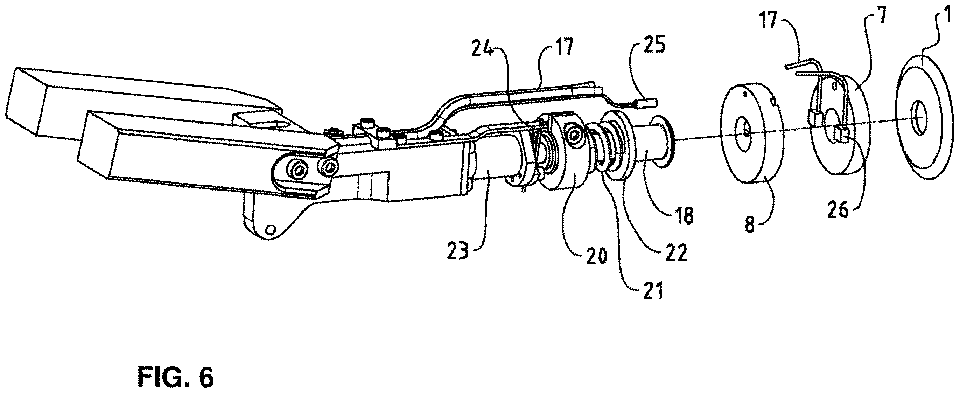

Wie in den Figuren 4 und 6 gezeigt, sind, um die Temperatur der Werkzeuge 1 messen und regeln zu können, Temperaturfühler 25, vorteilhafterweise in Form von Pt100, Pt1000 oder Thermoelementen vorgesehen. Die Temperaturfühler 25 werden durch die in der Isolationsscheibe 8 und im Heizring 7 dafür vorgesehene Löcher bis an die Werkzeuge 1 geführt. Darüber hinaus, wie aus der Figur 6 zu entnehmen ist, ist die Isolationsscheibe 8 vorzugsweise derart konzipiert, dass sie Aussparungen für die elektrischen Drähte 17 und die Kontakte 26 der Heizringe umfasst. Da die Heizleistung und Wärmeabfuhr an allen Werkzeugen etwa gleich gross ist, kann für die Heizungsregelung, um Kosten und Aufwand zu sparen, die Temperatur auch nur bei einem Messer gemessen und die Heizringe 7 parallel betrieben werden.

Wegen der Drähte 17 der Heizwiederstände 7 und der Drähte für den Temperaturfühler 25 ist es nicht möglich und auch nicht erwünscht, dass sich die Werkzeuge 1 mehr als um einen bestimmten Winkel um die Werkzeugdrehachse B drehen können. Während dem Erzeugen einer Sollbruchstelle in der Schirmfolie werden die Werkzeuge 1 der Vorrichtung 100 somit nur hin und her um das Kabel geschwenkt. Vorzugsweise werden die Werkzeuge 1 um einen Winkel von mindestens +/-60° um die Vorrichtungsdrehachse A hin und her geschwenkt, sodass eine Sollbruchstelle auf dem ganzen Umfang der Schirmfolie erzeugt werden kann.

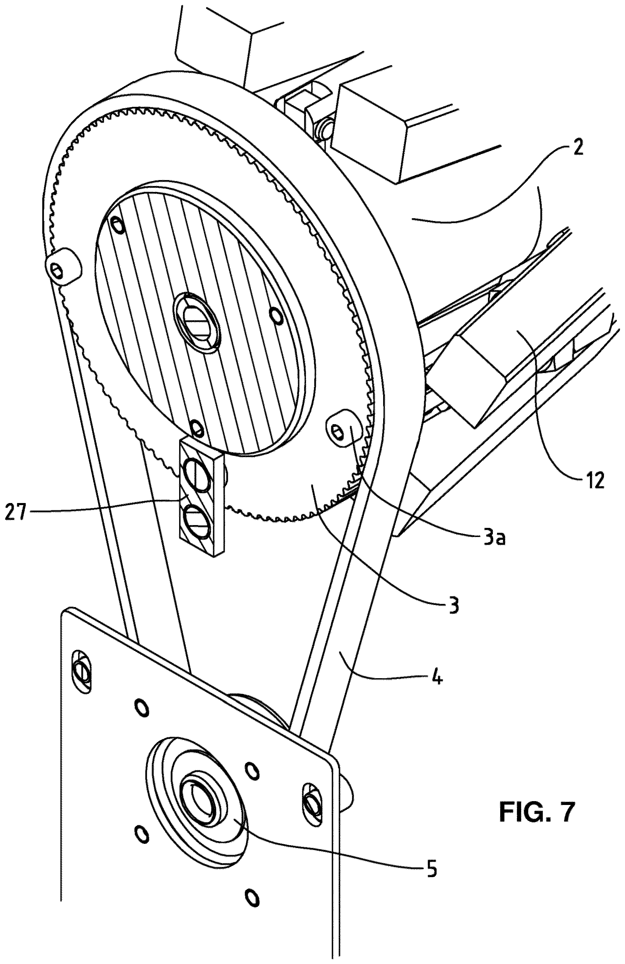

Die Begrenzung des Drehwinkels der Werkzeuge 1 um die Vorrichtungsdrehachse A kann natürlich mit einer Regelung des Motors 6 erfolgen. Vorteilhafterweise verfügt aber die Vorrichtung 100 über eine physische Drehwinkelbegrenzung 27, wie in Figur 7 dargestellt. Die Drehwinkelbegrenzung 27 hat in diesem Beispiel die Form einer Anschlagsplatte, die mit der ersten Lagerplatte 28 der Vorrichtung 100 drehsicher verbunden ist. Wie in dieser Figur zu sehen ist, verfügt das erste Zahnriemenrad 3 über die Begrenzungsschrauben 3a, die nach einem Drehwinkel des ersten Zahnriemenrads von mehr als +/-60° in Kontakt mit der Drehwinkelbegrenzung 27 kommen und somit den Schwenkwinkel der Vorrichtungswelle 2, und demzufolge der Werkzeuge 1, auf einen Winkel von mindestens +/-60° begrenzen.

Da bei der Vorrichtung 100 gemäss dem Beispiel der Figuren 1 bis 7 vorgesehen ist, dass die Werkzeuge 1 um das Kabel hin und her schwenken und nicht komplett um das Kabel kreisen, ist es vorteilhaft, wenn alle Werkzeuge 1 über eine gleich scharfe Schneidkante 1a verfügen. Wobei die Schneidkante 1a einen Radius von 0.01 bis 8 mm vorzugsweise von 0.05 bis 1 mm, vorteilhafterweise von 0.1 bis 0.5 mm aufweist.

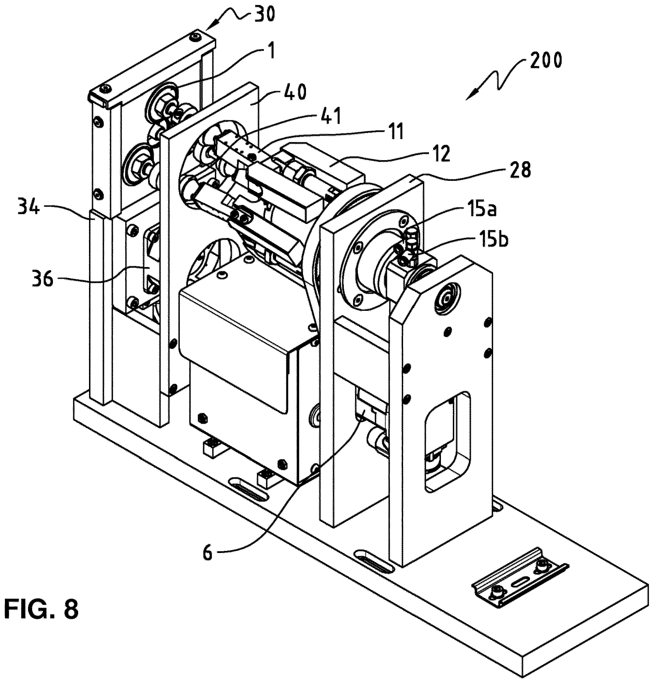

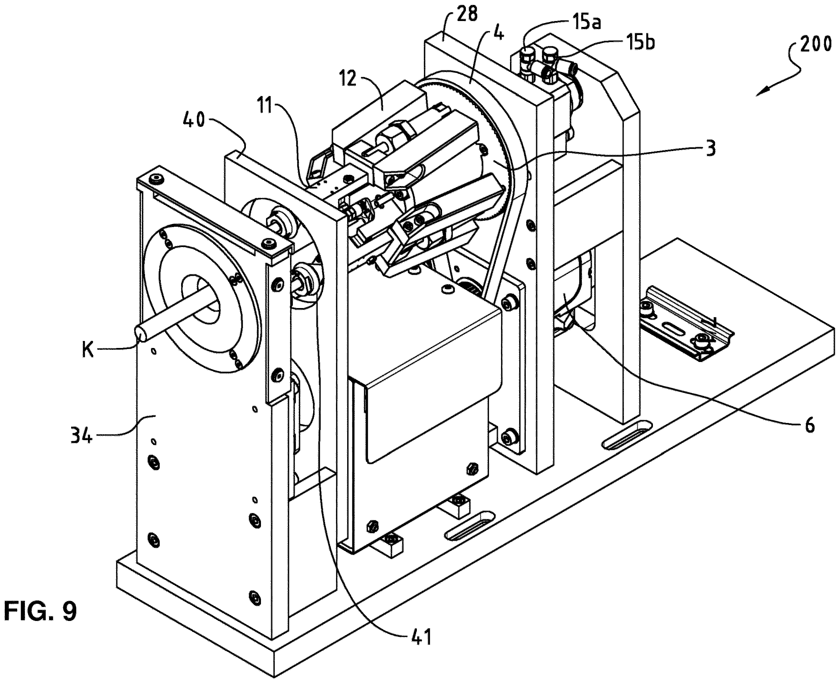

Figuren 8 und 9 zeigen perspektivische Ansichten einer Vorrichtung 200 zur Unterstützung der Entfernung der Schirmfolie eines elektrischen Kabels K gemäss einer ersten Ausführungsform der vorliegenden Erfindung. Figur 8 zeigt die Vorrichtung 200 mit den Werkzeugen 1 in ihrer offenen Stellung, während in Figur 9 die Vorrichtung 200 mit zugestellten Werkzeugen dargestellt ist. Der Zustellmechanismus 10 der Vorrichtung 200 entspricht demjenigen der Vorrichtung 100 und wird daher hier nicht nochmals im Detail beschrieben. Die Vorrichtungen 100 und 200 unterscheiden sich unter anderem durch die Art und Weise, mittels welcher die Werkzeuge geheizt werden. Wie vorgängig schon erläutert, werden bei der Vorrichtung 100 die Werkzeuge 1 mittels Heizwiderstände geheizt. Hingegen werden die Werkzeuge 1 in der Vorrichtung 200 mittels eines induktiven Heizsystems 30 erhitzt.

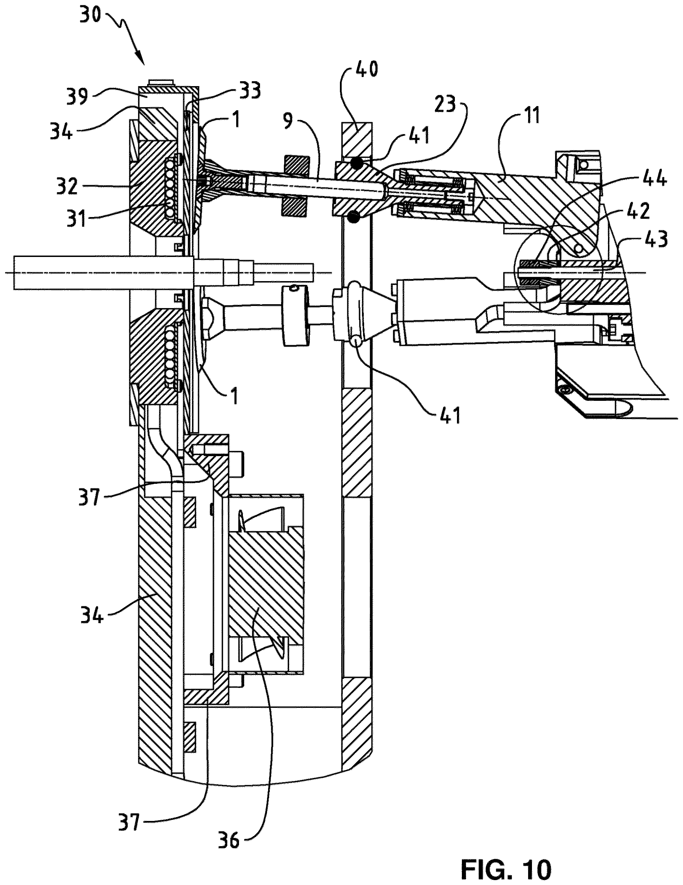

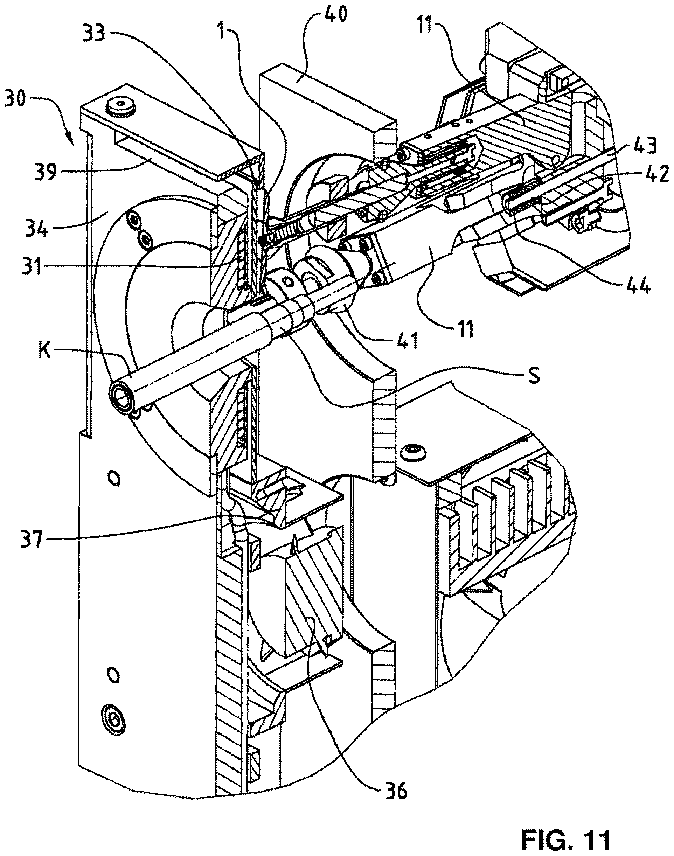

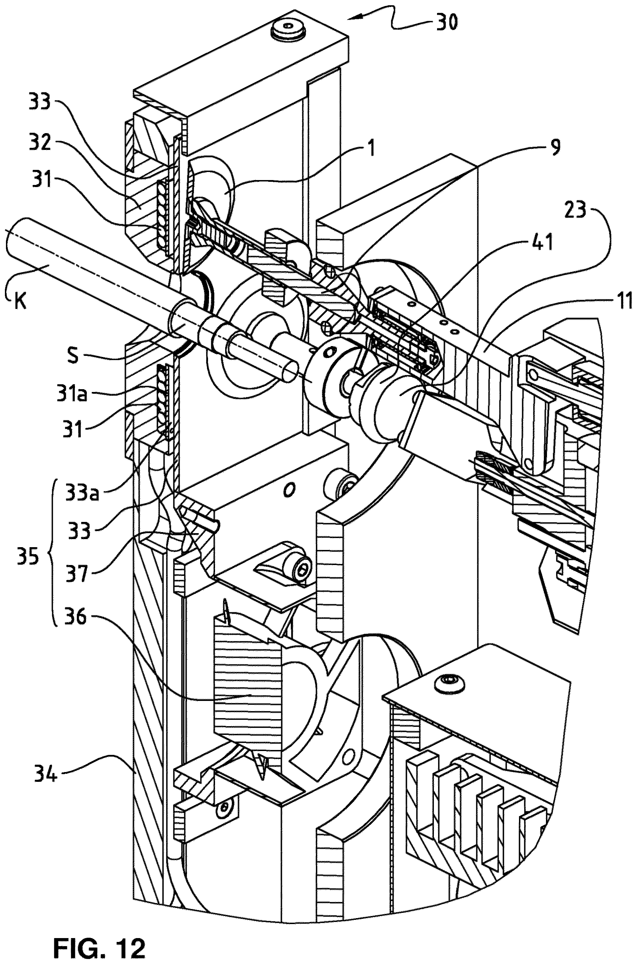

Das induktive Heizsystem 30 wird am besten anhand der Figuren 10 bis 12 beschrieben. Die Funktionsweise des Heizsystems 30 entspricht ungefähr derjenigen eines induktiven Kochfeldes und umfasst eine Induktionsspule 31, vorzugsweise eine Planarspule, aus Hochfrequenzlitze, mittels welcher ein hochfrequentes magnetisches Wechselfeld in den Werkzeugen 1 erzeugt wird. Durch die in den Werkzeugen 1 induzierten Wirbelströme und durch die Ummagnetisierungsverluste wird die in die Spule eingespeiste elektrische Leistung in Wärme in den Werkzeugen 1 umgewandelt. Vorteilhafterweise ist die Frequenz des in der Spule fliessenden elektrischen Stroms im tiefen Radio-Frequenz- Bereich von 10 bis 100kHz, insbesondere im Bereich 20 bis 50kHz.

Um Wirbelströme, und daher Wärme, in den Werkzeugen 1 erzeugen zu können, müssen die Werkzeuge 1 zumindest teilweise aus einem leitfähigen Material bestehen, zum Beispiel aus einem Metall. Um den magnetischen Fluss zu bündeln und auch Ummagnetisierungsverluste in Wärme umzusetzen, bestehen die Werkzeuge 1 vorteilhafterweise zumindest teilweise aus einem ferromagnetischen Material. Die Werkzeuge 1 können zum Beispiel eine Schicht aus ferromagnetischem Material aufweisen (hier nicht gezeigt). Dadurch können die Werkzeuge 1 sehr schnell erhitzt werden. Für einen guten Wirkungsgrad der Umwandlung der in die Induktionsspule 31 eingebrachten elektrischen Leistung in Wärmeenergie in den Werkzeugen 1, weist das Material der Werkzeuge vorteilhafterweise einen hohen spezifischen elektrischen Widerstand auf, zum Beispiel einen um das Vielfache höheren spezifischen elektrischen Widerstand als jener der Induktionsspule 31. Der grosse Vorteil einer induktiven Heizung der Werkzeuge 1 gegenüber der Heizung der Werkzeuge 1 mit Heizwiderständen ist, dass keine Kabel auf Seite der Werkzeuge notwendig sind, was ein komplettes Kreisen der Werkzeuge 1 um das Kabel ermöglicht. Dadurch ist es nicht notwendig, dass alle Werkzeuge 1 über eine gleich scharfe Schneidkante 1a verfügen. Es reicht, wenn ein Werkzeug 1 eine Schneidkante 1a aufweist. In diesem Fall können die anderen Werkzeuge als Zentrierwerkzeuge benutzt werden. Wenn nur ein Werkzeug für die Schirmfolie eine aktive Schneidkante 1a aufweist, fällt die Gefahr eines Mehrfachschnittes der Schirmfolie aus. Zu beachten ist, dass die Zentrierwerkzeuge aus einem elektrisch und/oder einem magnetisch schlecht leitenden Material bestehen können. Dadurch werden die Zentrierwerkzeuge durch die induktive Heizung wenig oder nicht erhitzt. Zum Beispiel könnten die Zentrierwerkzeuge aus einem austenitischen Stahl oder aus Keramik bestehen.

Um die Magnetfeldstärke und Induktivität erhöhen und gleichzeitig die Frequenz und die magnetischen Streufelder reduzieren zu können, ist die induktionsspule 31 vorteilhafterweise in einem Spulenkörper 32 aus einem weichmagnetischen Material eingebettet. Dies hat weiter den Vorteil, dass der Magnetfluss gebündelt und in Richtung der Werkzeuge gelenkt wird. Das Material des Spulenkörpers 32 besteht vorteilhafterweise aus isoliertem Eisenpulver mit hochtemperaturbeständigem organischem Bindemittel. Damit entsteht ein Material, in dem auch im hoch frequenten Magnetfeld keine Wirbelströme entstehen, wobei das Material nicht viel der hohen magnetischen Permeabilität des Eisens einbüsst und gleichzeitig auch eine gute mechanische Festigkeit erreicht.

Um die Induktionsspule 31 aus Hochfrequenzlitze herstellen und montieren zu können, muss sie in eine feste Form gebracht werden. Das kann mit einem Wickelkörper 31a erreicht werden, oder man lässt die gewickelte Induktionsspule in einem Werkzeug mit einem Bindemittel aushärten.

Das induktive Heizsystem 30 umfasst weiter eine Abdeckplatte 33, vorzugsweise aus Glaskeramik, eine Spulenträgerplatte 34 sowie ein Kühlungssystem 35. Das Kühlungssystem 35 ist vorgesehen, um die Induktionsspule 31, den Wickelkörper 31a, den Spulenkörper 32 und die Spulenträgerplatte 34 zu kühlen. In der Vorrichtung 200 hat das Kühlungssystem 35 die Form eines Luftkühlungssystems, das einen Ventilator 36 umfasst. Der Ventilator 36 ist derart konzipiert, um einen Luftstrom von kalter Luft in Richtung der Spulenträgerplatte 34 zu erzeugen. Ferner ist ein Ventilatorflansch 37 vorgesehen, mittels welchem der Luftstrom in Richtung der Induktionsspule 31 umgeleitet wird. Die aus dem Ventilator 36 stammende Luft strömt dabei im Luftspalt 33a zwischen der Abdeckplatte 33 und der Spulenträgerplatte 34 bevor sie den Luftauslass 39 erreicht. Obwohl ein Luftkühlungssystem in den Figuren zur Vorrichtung 200 dargestellt ist, könnte stattdessen im Rahmen der vorliegenden Erfindung ein Wasserkühlungssystem vorgesehen sein, wobei die Induktionsspule aus einem dünnwandigen Kupferrohr bestehen könnte, welches wasserdurchflossen betreibbar ist.

Wie vorgängig erläutert, zeigen die Werkzeuge 1, wenn sie in Kontakt mit dem Kabel sind, eine abrollende Bewegung. Da die Werkzeuge 1 keinen eigenen Motor aufweisen, rotieren sie nicht um ihre Drehasche B, wenn sie nicht in Kontakt mit dem Kabel K sind. Im Fall der Vorrichtung 100 verursacht dies kein wesentliches Problem, da die Werkzeuge 1 direkt durch die Heizwiderstände 7 erhitzt werden. Bei der Vorrichtung 200 ist es wegen der Inhomogenität des durch die Induktionsspule 31 erzeugten magnetischen Feldes vorteilhaft, wenn sich die Werkezuge 1 auch in der offenen Stellung um ihre Drehachsen B drehen, damit die Werkzeuge um ihren ganzen Umfang gleichmässig erhitzt werden. Deswegen ist bei der Vorrichtung 200 eine Abrollplatte 40 vorgesehen und die Lagerhalterungen 23 weisen an ihrem Umfang einen O-Ring 41 auf. Der Zustellmechanismus 10 der Vorrichtung 200 ist derart konfiguriert, dass in der offenen Stellung die O-Ringe 41 in Kontakt mit der Abrollplatte 40 kommen. Die Abrollplatte 40 zusammen mit der Vorrichtung 200 bilden somit ein Planetenradsystem mit den Werkzeugen 1 als Planetenräder der Abrollplatte als Hohlrad und dem Kabel K als Sonnenrad. Durch das Rotieren der Vorrichtung 200 und das Kreisen der Werkzeuge 1 um die Vorrichtungsachse A rotieren auch in offener Stellung die Werkzeuge 1 um ihre Werkzeugsdrehachse B und können dadurch homogen erhitzt werden. Durch die isolierenden Werkzeugwellen 9 werden die Lagerhalterungen 23 und somit die O-Ringe 41 nicht unzulässig heiss. Zu beachten ist, dass andere Mechanismen denkbar sind, mittels welcher gewährleistet werden könnte, dass die Werkzeuge 1 auch in offener Stellung um ihre Werkzeugdrehachse B rotieren würden. Es könnte zum Beispiel an der Stelle der O-Ringe Zahnräder vorgesehen werden. Dabei würde die Abrollplatte ein verzahntes Hohlrad umfassen, mit welchen die Zahnräder der Lagerhalterung 23 zusammenwirken würden.

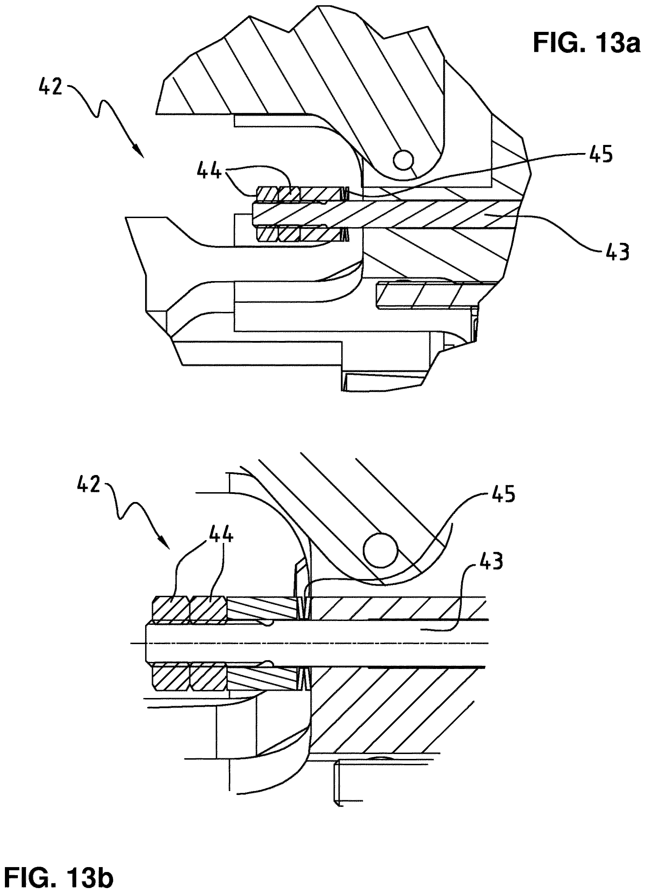

Wie die Vorrichtung 100 verfügt die Vorrichtung 200 auch über einen Öffnungsanschlag 42, welcher die Amplitude der Bewegung der Werkzeuge 1 begrenzt. Wie aus den Figuren 13a, welche der Öffnungsanschlagmechanismus mit zugestellten Werkzeugen 1 zeigt, und 13b, welche der Öffnungsanschlagmechanismus mit offenen Werkzeugen 1 zeigt, zu entnehmen ist, umfasst der Öffnungsanschlag 42 der Vorrichtung 200 eine Tellerfeder 45, mittels welcher die Kraft auf die O-Ringe 41 reduziert werden kann. Zu beachten ist, dass eine Tellerfeder 45 auch bei der Vorrichtung 100 zur Reduktion der Anschlagskraft vorgesehen werden kann.

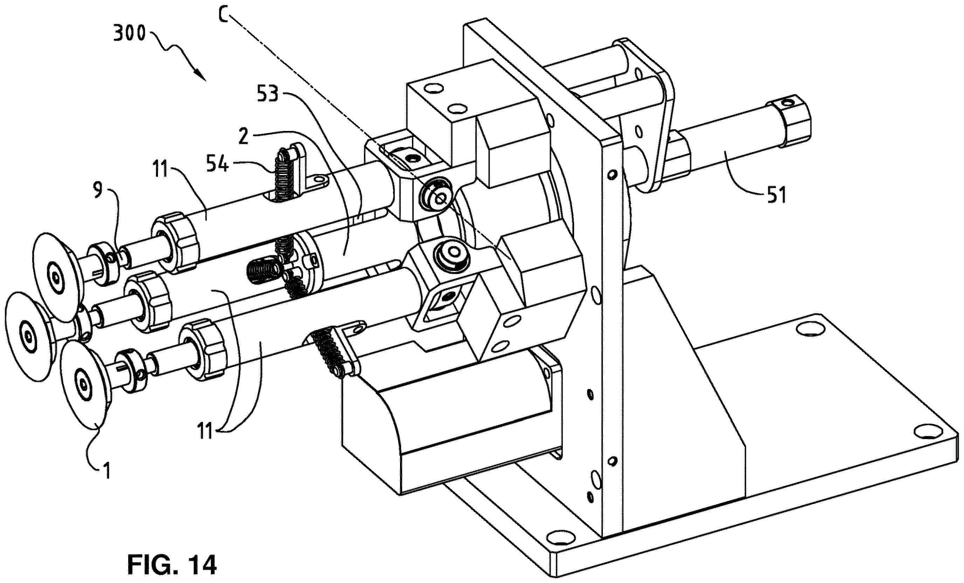

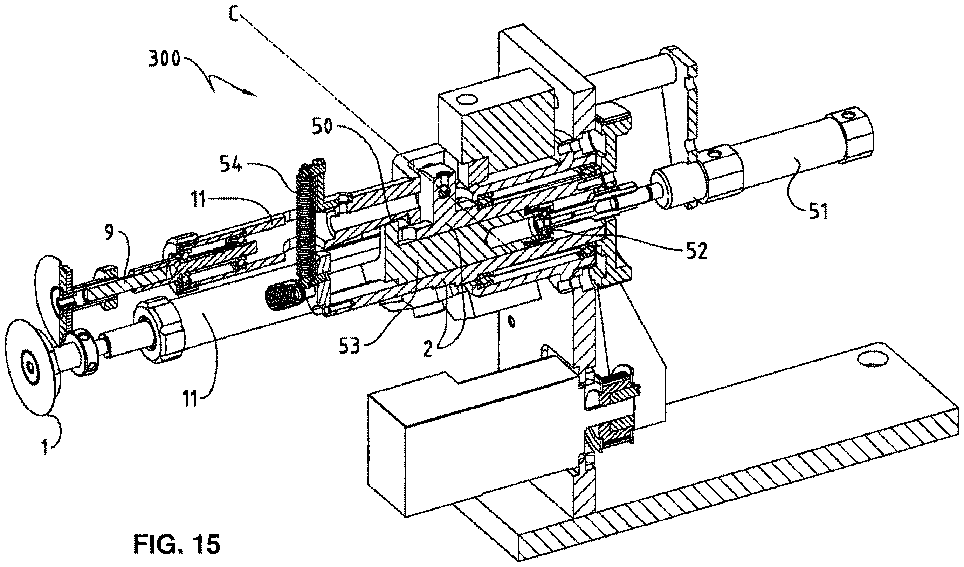

Figuren 14 und 15 zeigen eine Vorrichtung 300 zur Unterstützung der Entfernung der Schirmfolie eines elektrischen Kabels K gemäss einer zweiten Ausführungsform der vorliegenden Erfindung, wobei die Vorrichtung 300 sowohl mit einer elektrischen Widerstandsheizung, wie bei der Vorrichtung 100, als auch mit einer induktiven Heizung, wie bei der Vorrichtung 200, betrieben werden kann. Die Figuren 14 und 15 zeigen die Vorrichtung 300 mit den Werkzeugen 1 in geschlossener Stellung. Wie bei der Vorrichtung 100 und 200 sind die Werkzeuge 1 auch hier mittels einer Werkzeugwelle 9, vorzugsweise aus Keramik an die Kipparme 11, welche um die Kipparmdrehachse C drehbar gelagert sind, an der Vorrichtungswelle 2 angebracht.

Wie Figur 15 zeigt, ist gegenüber dem ersten Beispiel und der ersten Ausführungsform hier bei der zweiten Ausführungsform die Messeröffnung und - Zustellung über eine Keilfläche 50 in den Kipparmen 11 gelöst. Für die Messeröffnung wird mit einem Linearantrieb 51, vorzugsweise mit einem Pneumatikzylinder, über ein Lager 52 der Stössel 53 in Richtung der Werkzeuge 1 verschoben, wodurch die Kipparme 11 um die Kipparmdrehachse (C) auseinandergedrückt werden. Für die Zustellung der Werkzeuge 1 wird der Stössel 53 zurückgefahren, wodurch die Kipparme über die Zugfedern 54 um die Kipparmdrehachse C zusammengezogen werden. Die Zugfedern 54 sind an einem Ende an der Vorrichtungsdrehachse A und am anderen Ende an den Kipparmen 11 angebracht und vorgespannt. Über die Vorspannung der Zugfedern 54 und deren Federkonstante kann die Anpresskraft der Werkzeuge 1 auf die Schirmfolie eingestellt werden. Wie bei der Vorrichtung 100 und 200 kompensieren auch bei der Vorrichtung 300 Gegengewichte 12 das Eigengewicht und Fliehkräfte der Kipparme 11, sodass während der Bearbeitung des Kabels die Anpresskraft der Werkzeuge 1 auf die Schirmfolie unabhängig vom Drehwinkel der Vorrichtungswelle 2 und dessen Drehzahl ist.

Anstatt keilartige Flächen an den Kipparmen 11 zu platzieren, könnten diese Flächen ebenso im Stössel eingearbeitet oder mit diesem verbunden sein entweder mit einer pyramidalen oder konischen Form.

Zum Schluss sei nochmals darauf hingewiesen, dass die hier beispielhaft beschriebenen Ausführungsformen nur Realisierungsmöglichkeiten der erfindungsgemässen Ideen darstellen und keinesfalls als limitierend angesehen werden sollen. Der Fachmann wird verstehen, dass noch andere Implementierungen der Erfindung und weitere Elemente möglich sind, ohne dass die wesentlichen Merkmale der Erfindung vernachlässigt werden.

### Bezugsliste

1: Werkzeug
1a: Schneidkante
2. Vorrichtungswelle
3: erstes Zahnriemenrad
3a: Begrenzungsschrauben
4: Zahnriemen
5: zweites Zahnriemenrad
6. Motor
7: Heizwinderstände, (Heizringe)
8: Isolationsscheibe
9: Werkzeugwelle
10: Zustellmechanismus
11: Kipparme
12: Gegengewichte
13: Verbindungszylinder
13a: Federzylinder
13b: Zylinderfeder
13c: Überwurfkontermutter
13d: Zylinderstange
13e: Überwurfmutter
14: Druckkolben
15a:Schliessdruckanschluss
15b: Öffnungsdruckanschluss
16: Rotationsverteiler
17: elektrische Drähte
18: Werkezughülse
19a: Schliessdruckkammer
19b: Öffnungsdruckkammer
20: Klemmring
21: Verspannfeder
22: Pressring
23: Lagerhalterungen
24: Schenkelfeder
25: Temperaturfühler
26: Kontakte der Heizplatte
27: Drehwinkelbegrenzung
28: erste Lagerplatte
30: induktives Heizsystem
31: Induktionsspule
31a: Wickelkörper
32: Spulenkörper
33: Abdeckplatte
33a: Luftspalt
34: Spulenträgerplatte
35: Kühlungssystem
36: Ventilator
37: Ventilatorflansch
39: Luftauslass
40: Abrollplatte
41: O-Ring
42: Öffnungsanschlag
43: Anschlagstange
44: Kontermuttern
45: Tellerfeder
50: Keilfläche
51: Linearantrieb
52: Lager
53: Stössel
54: Zugfedern
100: erstes Beispiel einer Vorrichtung zur Unterstützung der Entfernung der Schirmfolie eines elektrischen Kabels
200: erste Ausführungsform einer Vorrichtung zur Unterstützung der Entfernung der Schirmfolie eines elektrischen Kabels
300: zweite Ausführungsform einer Vorrichtung zur Unterstützung der Entfernung der Schirmfolie eines elektrischen Kabels
A: Vorrichtungsdrehachse
B: Werkzeugdrehachse
C: Kipparmdrehachse
Da: Durchmesser der Werkzeuge
K: Kabel
S: Schirmfolie

## Patentansprüche

1. Vorrichtung (200, 300) zur Unterstützung der Entfernung einer zumindest teilweise freigelegten Schirmfolie (S) eines elektrischen Kabels (K), umfassend mindestens ein Werkzeug (1), das zumindest teilweise entlang eines Umfangs der Schirmfolie mit dem Kabel (K) in Kontakt bringbar ist, wobei mittels des Werkzeuges (1) eine Sollbruchstelle in der Schirmfolie (S) erzeugbar ist,
wobei das Werkzeug (1) scheibenförmig und um eine Werkzeugdrehachse (B) drehbar montiert ist,
wobei das Werkzeug (1) mittels eines Motors (6) der Vorrichtung (200, 300) in eine Kreisbewegung bringbar ist, um eine Vorrichtungsdrehachse (A), die der Längsachse des elektrischen Kabels (K) entspricht, dessen Schirmfolie (S) zu entfernen ist, **dadurch gekennzeichnet,**
**dass** die Vorrichtung Heizmittel (7, 30) umfasst, mittels welcher das Werkzeug (1) heizbar ist,
wobei das Werkzeug (1) mittels eines induktiven Heizsystems (30) heizbar ist, wobei das induktive Heizsystem (30) mindestens eine Induktionsspule (31), vorzugsweise eine Planarspule, umfasst, die im Wesentlichen planparallel zum Werkzeug (1) orientiert ist, und wobei die Induktionsspule (31) koaxial um die Vorrichtungsdrehachse (A) positioniert ist.

2. Vorrichtung (200, 300) gemäss Anspruch 1, wobei das Werkzeug (1) mit einer abrollenden Bewegung um die Schirmfolie in eine Kreisbewegung bringbar ist.

3. Vorrichtung (200, 300) gemäss einem der Ansprüche 1 oder 2, wobei das Werkzeug (1) mittels eines Zustellmechanismus (10) radial zur Vorrichtungsdrehachse (A) von einer offenen Stellung, in welcher das Werkzeug (1) mit der Schirmfolie des Kabels (K) nicht in Kontakt ist, in eine zugestellte Stellung, in welcher das Werkzeug (1) in Kontakt mit der Schirmfolie des Kabels (K) ist, zustellbar ist, wobei der Zustellmechanismus (10) vorteilhafterweise pneumatisch, hydraulisch oder elektromotorisch antreibbar ist.

4. Vorrichtung (200, 300) gemäss einem der vorherigen Ansprüche, wobei das Werkzeug (1) mit einer einstellbaren Anpresskraft radial zur Vorrichtungsdrehachse an die Schirmfolie drückbar ist.

5. Vorrichtung (200, 300) gemäss Anspruch 4, wobei der Betrag der Anpresskraft mit der Vorspannung einer Feder (13b) eingestellt wird.

6. Vorrichtung (200, 300) gemäss Anspruch 3 und 4, wobei der Betrag der Anpresskraft mit dem pneumatischen oder hydraulischen Druck des Zustellmechanismus (10) einstellbar ist.

7. Vorrichtung (200, 300) gemäss einem der vorherigen Ansprüche, umfassend einen zumindest teilweise um die Induktionsspule (31) platzierten magnetisch leitfähigen Spulenkörper (32), vorzugsweise mit einer magnetischen Permeabilität grösser 2, mittels welchem die Induktivität der Spule erhöht und das magnetische Feld der Spule (31) in Richtung des Werkzeuges (1) lenkbar ist.

8. Vorrichtung (200, 300) gemäss Anspruch 7, wobei der Spulenkörper (32) zumindest teilweise aus einem weichmagnetischen Material, vorzugsweise aus einem ferromagnetischen oder ferritischen Material, besteht, wobei der Spulenkörper (32) vorteilhafterweise zumindest teilweise aus einem isolierten Eisenpulver mit Bindemittel besteht.

9. Vorrichtung (200, 300) gemäss einem der vorherigen Ansprüche, wobei das Werkzeug zumindest teilweise aus einem ferromagnetischen Material besteht.

10. Vorrichtung (200, 300) gemäss einem der vorherigen Ansprüche, umfassend ein Kühlungssystem (35) zur Kühlung des induktiven Heizsystems (30), wobei das Kühlungssystem vorteilhafterweise ein Luftkühlungssystem (35) oder ein Wasserkühlungssystem ist.

11. Vorrichtung (200, 300) gemäss einem der Ansprüche 3 bis 10, umfassend eine Abrollplatte (40), mittels welcher das Werkzeug (1) auch in offener Stellung um die Werkzeugdrehachse (B) gedreht wird.

12. Vorrichtung (200, 300) gemäss einem der vorherigen Ansprüche, wobei das Werkzeug (1) ein Messer ist, welches eine runde Schneidkante aufweist.

13. Vorrichtung (200, 300) gemäss einem der vorherigen Ansprüche, umfassend mehrere, vorzugsweise drei, Werkzeuge, die koplanar in einer senkrecht zur Vorrichtungsachse (A) orientierten Ebene angeordnet sind, wobei vorteilhafterweise alle ausser eines der Werkzeuge Zentrierwerkzeuge sind.

14. Vorrichtung (200, 300) gemäss einem der vorherigen Ansprüche, wobei das Werkzeug (1) auf mindestens 250°C, vorteilhafterweise auf mindestens 400°C, vorzugsweise auf mindestens 550°C heizbar ist.

15. Vorrichtung (200, 300) gemäss einem der Ansprüche 3 bis 14, umfassend einen Öffnungsanschlag (42), mittels welchem der Abstand zwischen dem Werkzeug (1) in offener Stellung und der Vorrichtungsdrehachse (A) einstellbar ist, wobei der Öffnungsanschlag (42) vorteilhafterweise gefedert ist.

## Claims

1. Device (200, 300) for supporting the removal of an at least partially exposed shielding foil (S) of an electrical cable (K), comprising at least one tool (1) that is able to be brought into contact with the cable (K) at least partially along a circumference of the shielding foil, whereby a target breaking point is able to be created in the shielding foil (S) by means of the tool (1), ,
whereby the tool (1) is disc-shaped and is mounted so as to be rotatable about a tool rotational axis (B),
whereby the tool (1) can be made to move in a circular motion, by means of a motor (6) of the device (100, 200, 300), about a device rotational axis (A) corresponding to the longitudinal axis of the electrical cable (K) whose shielding foil (S) is to be removed,
**characterized in**
**that** the device comprises heating means (7, 30) by means of which the tool (1) is heatable,
whereby the tool (1) is able to be heated by means of an inductive heating system (30), whereby the inductive heating system (30) comprises at least one induction coil (31), preferably a planar coil, which is orientated substantially plane-parallel to the tool (1), and whereby the induction coil (31) is positioned coaxially about the axis of rotation (A) of the device.

2. Device (200, 300) according to claim 1, wherein the tool (1) is able to be brought into a circular motion with a rolling movement around the shielding foil.

3. Device (200, 300) according to one of the claims 1 or 2, wherein the tool (1) is able to be fed by means of a feed mechanism (10) radially to the device axis of rotation (A) from an open position, in which the tool (1) is not in contact with the shielding foil of the cable (K), into a fed position, in which the tool (1) is in contact with the shielding foil of the cable (K), whereby the feed mechanism (10) can advantageously be driven pneumatically, hydraulically or by an electric motor.

4. Device (200, 300) according to one of the preceding claims, wherein the tool (1) is able to be pressed against the shielding foil with an adjustable contact pressure radial to the axis of rotation of the device.

5. Device (200, 300) according to claim 4, wherein the amount of contact pressure is adjusted with the preload of a spring (13b).

6. Device (200, 300) according to claim 3 and 4, wherein the amount of contact pressure is adjustable by means of the pneumatic or hydraulic pressure of the feed mechanism (10).

7. Device (200, 300) according to one of the preceding claims, comprising a magnetically conductive coil former (32) placed at least partially around the induction coil (31), preferably with a magnetic permeability greater than 2, by means of which the inductance of the coil is increased and the magnetic field of the coil (31) is able to be directed in the direction of the tool (1).

8. Device (200, 300) according to claim 7, wherein the coil former (32) consists at least partially of a soft magnetic material, preferably of a ferromagnetic or ferritic material, whereby the coil former (32) advantageously consists at least partially of an insulated iron powder with a binding agent.

9. Device (200, 300) according to one of the preceding claims, wherein the tool consists at least partially of a ferromagnetic material.

10. Device (200, 300) according to one of the preceding claims, comprising a cooling system (35) for cooling the inductive heating system (30), wherein the cooling system is advantageously an air-cooling system (35) or a water-cooling system.

11. Device (200, 300) according to one of the claims 3 to 10, comprising a rolling plate (40), by means of which the tool (1) is rotated about the tool rotation axis (B) also in the open position.

12. Device (200, 300) according to one of the preceding claims, wherein the tool (1) is a blade, which has a round cutting edge.

13. Device (200, 300) according to one of the preceding claims, comprising a plurality of tools, preferably three, which are arranged coplanar in a plane orientated perpendicular to the device axis (A), advantageously all but one of the tools being centering tools.

14. Device (200, 300) according to one of the preceding claims, wherein the tool (1) is heatable to at least 250°C, advantageously to at least 400°C, preferably to at least 550°C.

15. Device (200, 300) according to one of the claims 3 to 14, comprising an opening stop (42), by means of which the distance between the tool (1) in the open position and the device axis of rotation (A) is adjustable, whereby the opening stop (42) is advantageously spring-loaded.

## Revendications

1. Dispositif (200, 300) destiné à supporter le retrait au moins partiellement d'un film de protection découvert (S) d'un câble électrique (K), comprenant au moins un outil (1) qui peut être amené en contact avec le câble (K) au moins partiellement le long d'une circonférence du film de protection (S), un point de rupture pouvant être créé dans le film de protection (S) au moyen de l'outil (1),
l'outil (1) se présentant sous forme de disque et étant monté de manière à être rotatif autour d'un axe de rotation de l'outil (B),
l'outil (1) pouvant être déplacé de façon circulaire, au moyen d'un moteur (6) du dispositif (100, 200, 300), autour d'un axe de rotation du dispositif (A) correspondant à l'axe longitudinal du câble électrique (K) dont le film de protection (S) doit être supprimé,
**caractérisé en ce que**
le dispositif comprend des moyens de chauffage (7, 30) au moyen duquel l'outil (1) peut être chauffé,
l'outil (1) pouvant être chauffé au moyen d'un système de chauffage à induction (30), le système de chauffage à induction (30) comprend au moins une bobine à induction (31), de préférence une bobine planaire, qui est orientée sensiblement parallèlement au plan de l'outil (1), et la bobine à induction étant positionnée de manière coaxiale autour de l'axe de rotation (A) du dispositif.

2. Dispositif (200, 300) selon la revendication 1, l'outil (1) pouvant être mis en mouvement circulaire selon un mouvement de roulement autour du film de protection.

3. Dispositif (200, 300) selon l'une des revendications 1 ou 2, l'outil (1) pouvant amené de manière radiale par rapport à l'axe de dispositif de rotation (A) au moyen d'un mécanisme de positionnement (10) depuis une position ouverte, dans laquelle l'outil (1) n'est pas en contact avec le film de protection du câble (K), vers une position de positionnement, dans laquelle l'outil (1) est en contact avec le film de protection du câble (K), le mécanisme de positionnement (10) pouvant avantageusement être actionné de manière pneumatique, hydraulique ou via un moteur électrique.

4. Dispositif (200, 300) selon l'une des revendications précédentes, l'outil (1) pouvant être maintenu en compression contre le film de protection avec une pression de contact radiale ajustable vis-à-vis de l'axe de rotation du dispositif.

5. Dispositif (200, 300) selon la revendication 4, le niveau de pression de contact étant ajusté avec la précharge d'un ressort (13b).

6. Dispositif (200, 300) selon les revendications 3 et 4, le niveau de pression de contact étant ajustable au moyen de la pression pneumatique ou hydraulique du mécanisme de positionnement (10).

7. Dispositif (200, 300) selon l'une des revendications précédentes, comprenant une forme de bobine magnétiquement conductrice (32) placée au moins partiellement autour du film de protection (31), préférablement avec une perméabilité magnétique plus grande que 2, au moyen de laquelle l'induction du film est augmentée et le champ magnétique du film (31) peut être dirigé dans la direction de l'outil (1).

8. Dispositif (200, 300) selon la revendication 7, le corps de bobine (32) consistant au moins partiellement en un matériau magnétique doux, de préférence un matériau ferromagnétique ou ferritique, le corps de bobine (32) consistant avantageusement au moins partiellement en une poudre de fer isolée avec un agent liant.

9. Dispositif (200, 300) selon l'une des revendications précédentes, l'outil consistant au moins partiellement en un matériau ferromagnétique.

10. Dispositif (200, 300) selon l'une des revendications précédentes, comprenant un système de refroidissement (35) pour refroidir le système de chauffage à induction (30), le système de refroidissement étant avantageusement un système de refroidissement à air (35) ou un système de refroidissement à eau.

11. Dispositif (200, 300) selon l'une des revendications 3 à 10, comprenant une plaque de roulement (40), au moyen de laquelle l'outil (1) est tourné autour de l'axe de rotation de l'outil (B) aussi dans la position ouverte.

12. Dispositif (200, 300) selon l'une des revendications précédentes, l'outil (1) étant une lame qui possède un bord de coupe rond.

13. Dispositif (200, 300) selon l'une des revendications précédentes, comprenant une pluralité d'outils, de préférence trois, qui sont agencés de manière coplanaire dans un plan orienté perpendiculairement à l'axe du dispositif (A), avantageusement tous les outils, sauf un, étant des outils de centrage.

14. Dispositif (200, 300) selon l'une des revendications précédentes, l'outil (1) étant chauffable à au moins 250°C, avantageusement à au moins 400°C, de préférence à au moins 550°C.

15. Dispositif (200, 300) selon l'une des revendications 3 à 14, comprenant un arrêt d'ouverture (42), au moyen duquel la distance entre l'outil (1) dans la position ouverte et l'axe du dispositif de rotation (A) est ajustable, l'arrêt d'ouverture étant avantageusement monté sur ressort.
